# EUROPÄISCHE PATENTANMELDUNG

(11) **EP 0 908 697 A1**
(43) Veröffentlichungstag der Anmeldung: **14.04.1999**
(21) Anmeldenummer: 98119193.5
(22) Anmeldetag: 12.10.1998
(51) Int. Cl.: G01B 7/34, G01B 7/26, G01B 7/32, B41N 7/06, G01F 17/00, B41F 33/00

(54) **Verfahren und Vorrichtung zur Messung des Volumens von Näpfchen an Druckwalzen**

(30) Priorität: 11.10.1997 DE 19745104
(71) Anmelder: Microspace Mess- und Sensortecknik GmbH, 09123 Chemnitz (DE)
(72) Erfinder: Klöden, Rolf, Dr., 09123 Chemnitz (DE); Marotzke, Donald, Dipl.-Ing., 09126 Chemnitz (DE); Klöden, Corinna, Dipl-Ing., 09123 Chemnitz (DE)
(74) Vertreter: Findeisen, Andreas

(57) **Zusammenfassung**

Das Anwendungsgebiet der Erfindung ist die Messung des Volumens von Näpfchen an Druckwalzen. Es wird die Aufgabe gelöst, ein Verfahren zur Messung des Näpfchenvolumens zu schaffen, das eine Meßwerterfassung auf nichtoptischem Prinzip ermöglicht. Dies wird erreicht, indem für die Volumenbestimmung ein kapazitives Meßverfahren verwendet wird, derart, daß zwischen dem Meßgerät und der Druckwalze ein elektrisches Feld erzeugt wird, dessen Feldstärke als Meßsignal für die Bestimmung des Näpfchenvolumens ausgewertet wird. Gleichzeitig wird eine Vorrichtung zur Anwendung dieses kapazitiven Meßverfahrens vorgeschlagen, die aus einem Grundgerät (1) mit einem Meßkopf (2) besteht, wobei der Meßkopf (2) eine Meßelektrode (3) aufweist, der sich in Richtung der zu bewertenden Druckwalze (4) ein elektrisch isolierendes Schutzschichtsystem (5) anschließt.

## Beschreibung

Die Erfindung betrifft ein Verfahren und eine Vorrichtung zur Messung des Volumens von Näpfchen an Druckwalzen.

In der Druckindustrie werden für den Farbauftrag überwiegend gravierte Walzen verwendet. Die Druckqualität ist neben den Eigenschaften der zu bedruckenden Materialien (Papier, Folie usw.) insbesondere davon abhängig, wie die zugeführte Farbe von der Walze zunächst aufgenommen und nachfolgend an das Druckmedium abgegeben wird. Diese Funktionen werden durch Füllen und Entleeren der in der Walze ausgestalteten Näpfchen realisiert. Die räumliche Kontur der Näpfchen bestimmt demzufolge wesentlich die Qualität der Druckerzeugnisse.

Für die Herstellung der Näpfchen sind verschiedene Technologien bekannt. Beispielsweise werden bei der elektromechanischen Gravur die Näpfchen mit einem Stichel unter definiertem Stichelwinkel in die Zylinderoberfläche eingraviert. Bei diesem spanenden Verfahren, das vorzugsweise verwendet wird, wenn Text- und/oder Bildinformationen in großen Auflagen gedruckt werden sollen, ist das Näpfchenvolumen von der Gravurtiefe und vom Verschleißzustand des Stichels abhängig. Weiterhin ist es bereits bekannt, die Näpfchen mit rotierenden Prägewerkzeugen (sog. Moletten) in die Zylinderoberfläche einzudrücken.

Neben derartigen mechanischen Verfahren können die Näpfchen auch durch Verdampfen von Material infolge Laseranwendung erzeugt werden, wobei die Näpfchengeometrie lediglich durch Modifizierung des Laserfokus und der Energiedichte beeinflußt werden kann. Ferner können die Näpfchen durch Ätzverfahren hergestellt werden. Hierbei weist die Oberfläche der Druckwalze einen Resistlack auf, aus dem mittels Laser Strukturen entsprechend den späteren lateralen Näpfchengeometrien herausgedampft werden. Die freiliegenden Stellen ergeben beim folgenden Ätzvorgang gute Angriffsstellen für das Ätzmittel. Die Näpfchengeometrie wird durch die zeitliche Steuerung des Ätzmittels bestimmt.

Unabhängig vom gewählten Herstellungsverfahren ist jedoch die räumliche Kontur der Näpfchen, insbesondere das Näpfchenvolumen, ein wesentlicher Parameter für die Steuerung der jeweiligen Druckmaschine bzw. für die grundsätzliche Auswahl der für den jeweiligen Einsatzzweck optimalen Druckwalze. Demzufolge besteht ein grundsätzliches Bedürfnis an weitgehend exakten Angaben zur tatsächlichen Näpfchengeometrie.

Für die qualitative Einschätzung der Näpfchengeometrie sind verschiedene Verfahren bekannt. Gegenwärtig wird noch überwiegend das Andruckverfahren angewendet, bei dem mit einer speziellen Andruckmaschine ein Probedruck hergestellt wird. Anschließend wird mit einem Densiometer die Farbdichte der bedruckten Testfelder bzw. der Druckinformationen gemessen. Der wesentliche Nachteil dieses Verfahrens besteht darin, daß eine Prüfung der Druckwalze erst nach ihrer vollständigen Fertigstellung erfolgt. Somit werden Mängel der Näpfchengeometrie entweder viel zu spät erkannt, um bereits bei der Fertigung der nächsten Walze berücksichtigt zu werden oder derartige Informationen werden dem Walzenhersteller überhaupt nicht mitgeteilt.

Ein anderes Verfahren, das insbesondere für die Bestimmung des Näpfchenvolumens an homogen gravierten Druckwalzen (Rasterwalzen) eingesetzt wird, nutzt die Eigenschaften von fluoreszierenden Flüssigkeiten. Die Flüssigkeit wird in die Näpfchen eingebracht und zum Leuchten angeregt. Die Stärke des energetischen Signals ist proportional zur vorhandenen Flüssigkeitsmenge und somit zum Näpfchenvolumen der gravierten Walze. Allerdings ergibt die Anwendung dieses Verfahrens neben einer ohnehin umständlichen Handhabung teilweise erhebliche Verschmutzungen. Ferner ist auch eine exakte Aussage zum vorhandenen Näpfchenvolumen nur bedingt möglich.

Diese Nachteile haben dazu geführt, daß sowohl das Andruckverfahren als auch das Fluoreszenzverfahren in der Praxis zunehmend von optischen Meßverfahren verdrängt werden, die eine Messung der Näpfchen und folglich eine Einflußnahme auf deren Fertigung bereits im Herstellungsprozeß ermöglichen.

Für optische Messungen der Näpfchen werden vorzugsweise modifizierte Meßmikroskope verwendet, mit denen zumindest die lateralen Parameter der Näpfchenstruktur ermittelt werden können. Höherwertige Geräte ermöglichen die zusätzliche Messung der Näpfchentiefe. Allerdings werden sowohl die laterale Ausdehnung als auch die Tiefe der Näpfchen über einen entsprechenden Fokussierbereich manuell vom Prüfer ermittelt, so daß dieses Verfahren erheblichen subjektiven Einflüssen unterliegt.

Dieser Nachteil läßt sich durch Anwendung von Meßmikroskopen vermeiden, die über Bildverarbeitung die lateralen Näpfchenparameter und die Fokussiertiefe automatisch ermitteln. Allerdings haben auch diese Systeme verschiedene Nachteile: Der gerätetechnische Aufbau ist groß und schwer, so daß sich Einschränkungen bezüglich der Handhabung und der transportablen Anwendung ergeben. Weiterhin benötigen diese Systeme für eine exakte Messung ideale optische Oberflächeneigenschaften des Prüflings, die überwiegend nur bei der elektromechanischen Gravur gewährleistet werden können.

Sofern die Näpfchen in der Druckwalze mit anderen Herstellungstechnologien ausgestaltet worden sind, können mit diesen Meßmikroskopen kaum exakte Meßwerte erzielt werden. Eine bessere Meßwerterfassung kann durch Anwendung konfokaler Mikroskope erreicht werden, die durch stetiges vertikales Verschieben der Fokusebene über die gesamte Tiefe der Näpfchen die Mikrotopographie ermitteln. Diesem Vorteil stehen jedoch ebenfalls als Nachteil große, schlecht handhabbare sowie sehr kostenintensive Geräte gegenüber.

Alternativ zur Verwendung verschiedenartiger Mikroskope ist die Anwendung des Laserscanverfahrens möglich, bei dem die Oberfläche der Walze mittels fokussiertem Laserstrahl abgetastet wird. Somit wird im scannenden Betrieb die Mikrostruktur der Oberfläche ermittelt. Die Arbeitsweise ähnelt dem Tastschnittverfahren, bei dem die Oberfläche mit einer Tastnadel abgerastert wird. Der Vorteil beider Verfahren besteht darin, daß die spezifische Näpfchengeometrie ohne Bedeutung für die Parameterermittlung ist. Nachteilig ist der extrem hohe Zeitaufwand für die Messungen sowie die Störanfälligkeit gegenüber Schwingungen und mechanischen Stößen. Außerdem wird zumindest beim Laserscanverfahren die Meßgenauigkeit stark von der optischen Qualität der Walzenoberfläche beeinflußt.

Zusammenfassend ist zu erkennen, daß die Nachteile der als Stand der Technik bekannten Verfahren zur Messung des Volumens von Näpfchen an Druckwalzen insbesondere dadurch begründet sind, daß jeweils optische Kennwerte der Walzenoberfläche bzw. der Näpfchen als Meßwert verarbeitet werden.

Aufgabe der Erfindung ist es deshalb, ein Verfahren zur Messung des Volumens von Näpfchen an Druckwalzen zu schaffen, das eine Meßwerterfassung auf nichtoptischem Prinzip ermöglicht. Gleichzeitig soll eine Vorrichtung zur Durchführung des entsprechenden nichtoptischen Verfahrens geschaffen werden.

Diese Aufgabe wird gelöst, indem für die Volumenbestimmung ein kapazitives Meßverfahren verwendet wird. Hierbei wird zwischen dem Meßgerät und der Druckwalze ein elektrisches Feld erzeugt, dessen Feldstärke als Meßsignal für die Bestimmung des Näpfchenvolumens ausgewertet wird. Aufgrund des elektrischen Wirkprinzips wird dieses Meßverfahren weder von optischen Eigenschaften der Walzenoberfläche noch von geometrischen Eigenschaften der Näpfchen beeinträchtigt. Das Verfahren kann deshalb für jegliche Druckwalzen eingesetzt werden, unabhängig davon, mit welcher Technologie die Näpfchen in der Walze erzeugt worden sind.

Vorteilhaft ist insbesondere, daß in jedem Anwendungsfall das tatsächliche Näpfchenvolumen gemessen wird, ohne daß durch geometrisch unbestimmte Werkzeugkonturen (z.B. beim Ätzen und der Lasergravur) oder verschleißbedingte Werkzeugänderungen (z.B. Stichelverschleiß bei elektromechanischer Gravur) eine Verfälschung der Meßwerte bewirkt wird. Demzufolge sind innerhalb extrem kurzer Meßzeiten exakte Aussagen über das zu druckende Farbvolumen bzw. den zu erzeugenden Rastertonwert möglich.

Zur Anwendung dieses kapazitiven Verfahrens wird eine Vorrichtung vorgeschlagen, die aus einem Grundgerät mit einem Meßkopf besteht, wobei der Meßkopf eine Meßelektrode aufweist, der sich in Richtung der zu bewertenden Druckwalze ein elektrisch isolierendes Schutzschichtsystem anschließt. Weitere Ausgestaltungen dieser Vorrichtung sind Gegenstand der Patentansprüche 3) bis 6), auf die hiermit verwiesen wird.

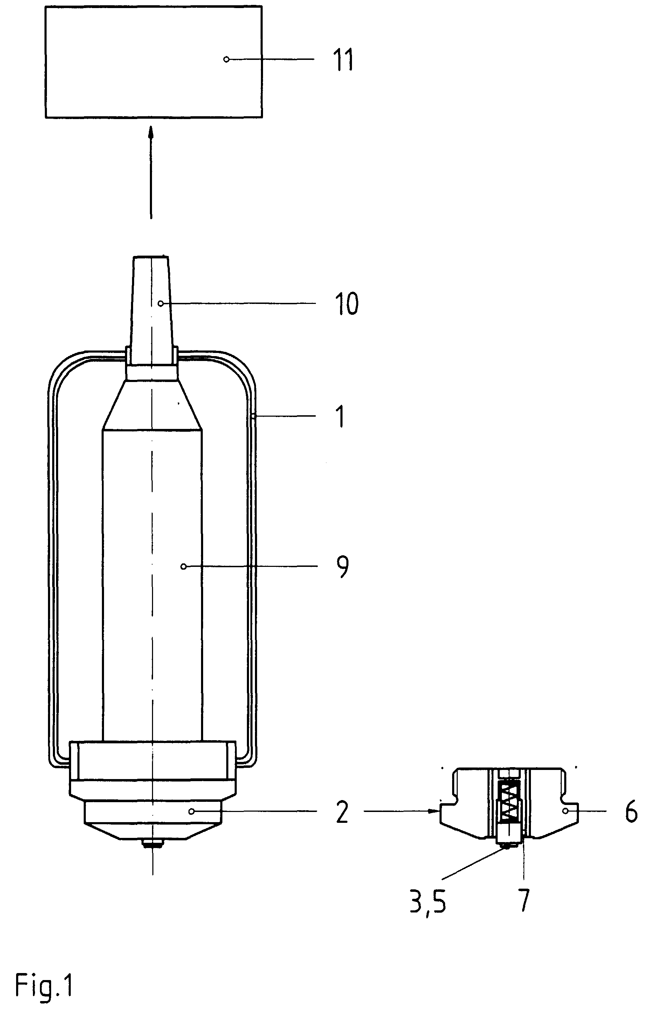

Ein Ausführungsbeispiel der Erfindung ist in der Zeichnung dargestellt und wird nachfolgend beschrieben. Es zeigen
- Fig. 1: den grundsätzlichen Aufbau der Meßvorrichtung mit zusätzlicher Detaildarstellung eines Meßkopfes

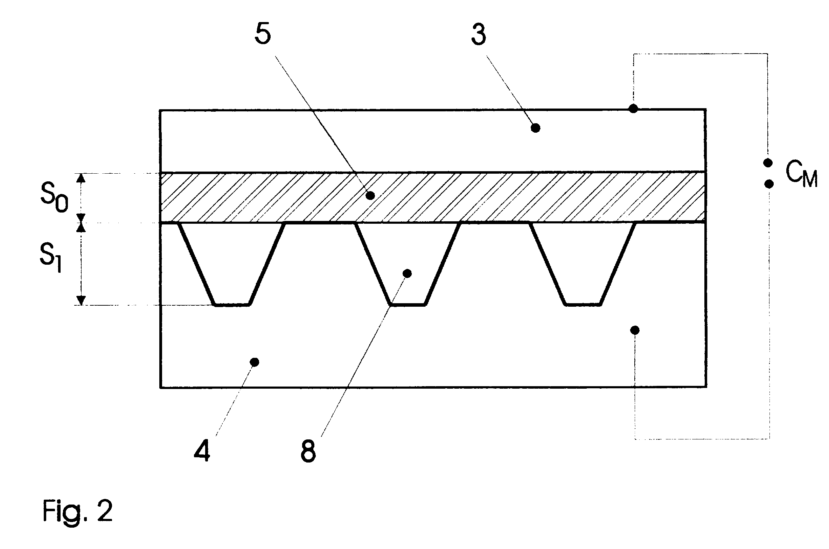

- Fig. 2: den Übergangsbereich von Grundgerät und Druckwalze

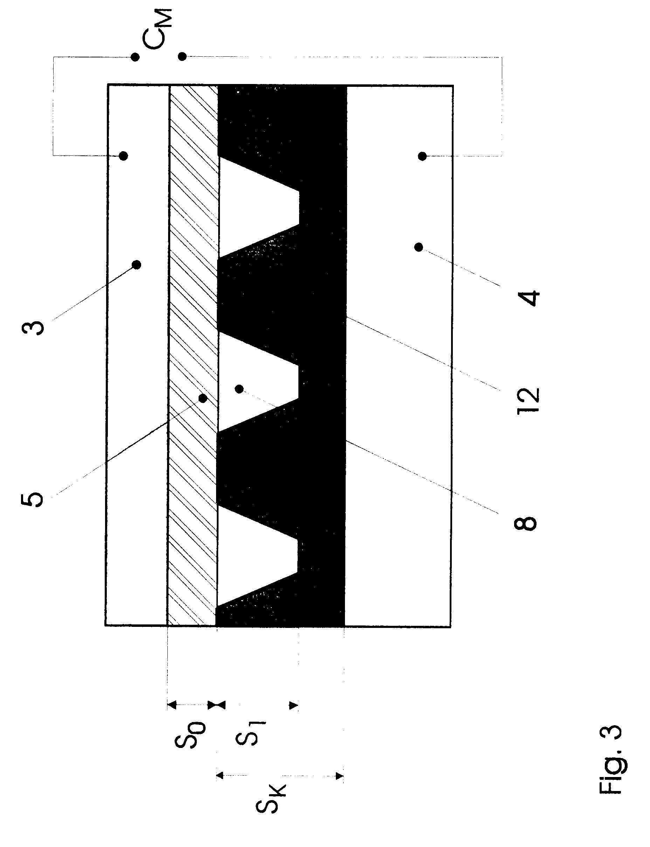

- Fig. 3: eine gleiche Ansicht wie Fig. 2, jedoch bei Messung einer Druckwalze mit Keramikschicht

Die als Ausführungsbeispiel gezeigte Vorrichtung zur Volumenbe-Stimmung der Näpfchen einer Druckwalze durch Anwendung eines kapazitiven Meßverfahrens besteht aus einem Grundgerät 1 mit einem Meßkopf 2. Der Meßkopf 2 ist mit dem Grundgerät 1 lösbar verbunden (z.B. durch Schraubverbindung), so daß in Abhängigkeit der Einsatzbedingungen der jeweils optimale Meßkopf 2 dem Grundgerät 1 zugeordnet werden kann. Am Meßkopf 2 ist eine Meßelektrode 3 angeordnet. Der Meßelektrode 3 ist in Richtung der zu bewertenden Druckwalze 4 ein elektrisch isolierendes Schutzschichtsystem 5 zugeordnet. Der Meßkopf 2 weist ferner einen Masseschirm 6 und einen aktiven phasensynchronen Schirm 7 auf. Diese Bauteile 6 und 7 schatten die Meßelektrode 3 von elektrischen Störfeldern ab. Der aktive Schirm 7 homogenisiert außerdem weitestgehend das elektrische Meßfeld und dämmt elektrische Streufelder am Rand der Meßelektrode 3 ein.

Die Meßelektrode 3 ist im Meßkopf 2 federnd gelagert. Dadurch wird die Meßelektrode 3 beim Aufsetzen auf die Walze 4 stets mit einer konstanten Kraft auf die Walzenoberfläche gedrückt. Demzufolge ergeben sich reproduzierbare Meßparameter und gleichzeitig wird eine Beschädigung der Meßelektrode 3 vermieden. Die Größe der Meßelektrode 3 wird vorteilhaft so gewählt, daß diese Elektrode 3 eine Vielzahl von Näpfchen 8 überdeckt, die folglich in eine gemeinsame Messung einbezogen werden. Durch Einbeziehung einer solchen Vielzahl von Näpfchen 8 wird das Meßergebnis wesentlich signifikanter und führt zu statistisch gesicherten Aussagen. Somit wird ausgeschlossen, daß der Anwender durch die Messung einzelner Näpfchen 8 stark abweichende Meßwerte aufgrund der gegebenenfalls stark unterschiedlichen Geometrien nebeneinanderliegender Näpfchen 8 erhält. Systematische Abweichungen, die sich aufgrund unterschiedlicher Walzendurchmesser gegenüber der planen Meßelektrode 3 ergeben, werden durch einen Korrekturfaktor kompensiert, der sich aus dem bekannten Durchmesser der Walze 4 ergibt.

Im Grundgerät 1 ist eine Sensorelektronik 9 integriert, mit der die vom Meßkopf 2 erzeugte Meßkapazität in ein Signal umgewandelt wird. Dieses, am Ausgang der Sensorelektronik 9 als Frequenz verfügbare Signal wird vom Grundgerät 1 über ein Verbindungskabel 10 an eine Auswerte- und Steuerelektronik 11 geleitet. Diese räumliche Trennung von Meßwerterfassung und Meßwertauswertung bietet die Möglichkeit, das Meßsystem als gut handhabbares Koffermeßsystem zu konzipieren. Das auf die Walzenoberfläche aufzusetzende Grundgerät 1 mit Meßkopf 2 ist klein und leicht, so daß Messungen innerhalb von Druckmaschinen wesentlich erleichtert werden. Neben dieser verbesserten Handhabung ist insbesondere die kurze Meßzeit von lediglich wenigen Sekunden vorteilhaft.

Bei Anwendung des erfindungsgemäßen Meßverfahrens bildet die Meßvorrichtung mit der zu messenden Druckwalze ein elektrisches System und nutzt das elektrische Feld als Meßinformationsträger für die Bestimmung des Näpfchenvolumens. Hierbei wird durch Aufsetzen des Meßkopfes 2 auf die Oberfläche der gravierten Walze 4 ein Kondensator gebildet, als dessen Elektroden die Meßelektrode 3 sowie die Oberfläche der Walze 4 wirken. Durch Anlegen einer elektrischen Spannung wird ein elektrisches Feld aufgebaut, so daß die Kapazität des somit entstandenen Meßkondensators ermittelt werden kann. Das Schutzschichtsystem 5, dessen Höhe in der Zeichung mit "S₀" gekennzeichnet ist, isoliert die Meßelektrode 3 von der Walze 4 elektrisch, so daß zwischen beiden Elektroden kein Ladungsträgeraustausch möglich ist. Die Meßkapazität ergibt sich demzufolge aus zwei in Reihe geschalteten Teilkapazitäten.

Die erste Teilkapazität wird durch die geometrischen und elektrischen Eigenschaften des Schutzschichtsystems 5 auf der Meßelektrode 3 bestimmt. Die zweite Teilkapazität ergibt sich aus dem Luftvolumen der zu messenden Näpfchen 8 in der Druckwalze 4. In der Zeichnung ist die Tiefe der Näpfchen 8 mit "S₁" bezeichnet. Die Darstellung zeigt allerdings eine ideale Näpfchengeometrie, die selbst mittels elektromechanischer Gravur kaum erreicht werden kann. Sofern derartig exakt ausgestaltete Näpfchen 8 realisiert werden könnten, würden ohnehin die bekannten optischen Meßverfahren genügen.

Die erste Teilkapazität ist konstant, so daß die Meßkapazität "C_{M}" als Gesamtkapazität des Meßkondensators von der zweiten Teilkapazität abhängig ist. Da diese zweite Teilkapazität durch das Volumen der Näpfchen 8 bestimmt wird, ändert sich die Gesamtkapazität in Abhängigkeit der jeweils vorliegenden Näpfchenkontur. Ändert sich also das Schöpfvolumen der Näpfchen 8, das zum Zeitpunkt der "farblosen" Prüfung dem Luftvolumen der Näpfchen 8 entspricht, ändert sich die Meßkapazität und demzufolge auch der Meßwert. Folglich ist das vorgeschlagene Meßverfahren tatsächlich geeignet, um auf nichtoptischem Prinzip eine Aussage zum Volumen der in der Druckwalze 4 ausgestalteten Näpfchen 8 zu erhalten. Durch spezielle Software ist neben der Auswertung von Einzelmeßwerten und Meßreihen sowie den Vergleichen mit Sollwerten und Toleranzgrenzen auch eine statistische Analyse vorgegebener Mengen von Meßwerten möglich.

In der Druckindustrie werden anstelle der konventionellen metallischen Druckwalzen zunehmend keramikbeschichtete Walzen verwendet. Auch an solchen Walzen, deren metallischer Walzenkern keramisch beschichtet ist, kann das vorgeschlagene Meßverfahren angewendet werden. Bei der Messung des Volumens der Näpfchen an den Keramikwalzen setzt sich die Meßkapazität neben der ersten und zweiten Teilkapazität aus einer zusätzlichen dritten Teilkapazität zusammen, die durch den Keramikanteil bestimmt wird. Die dritte Teilkapazität kann bei der Messung durch Eingabe der Keramikschichtdicke "S_{K}" berücksichtigt werden, wobei die Messung der Keramikschicht 12 zweckmäßig mit einem einfachen Handmeßgerät erfolgt.

Für die vorliegende technische Lösung ergeben sich vielfältige Anwendungen. Die Messungen ermöglichen, unabhängig von der jeweiligen Herstellungstechnologie der Walzen, Aussagen zum Volumen der Näpfchen, zum Verschleiß insbesondere an Rasterwalzen, zur Bestimmung von Rastertonwerten sowie zur Detektierung von Farbrückständen.

### Aufstellung der verwendeten Bezugszeichen

- 1: Grundgerät
- 2: Meßkopf
- 3: Meßelektrode
- 4: Druckwalze
- 5: elektrisch isolierendes Schutzschichtsystem
- 6: Masseschirm
- 7: aktiver phasensynchroner Schirm
- 8: Näpfchen
- 9: Sensorelektronik
- 10: Verbindungskabel
- 11: Auswerte- und Steuerelektronik
- 12: Keramikschicht
- "C_{M}": Meßkapazität
- "S₀": Höhe des Schutzschichtsystems
- "S₁": Tiefe der Näpfchen
- "S_{K}": Dicke der Keramikschicht

## Patentansprüche

1. Verfahren zur Messung des Volumens von Näpfchen an Druckwalzen, dadurch gekennzeichnet,
daß für die Volumenbestimmung ein kapazitives Meßverfahren verwendet wird, derart, daß zwischen dem Meßgerät und der Druckwalze ein elektrisches Feld erzeugt wird, dessen Feldstärke als Meßsignal für die Bestimmung des Näpfchenvolumens ausgewertet wird.

2. Vorrichtung zur Messung des Volumens von Näpfchen an Druckwalzen unter Verwendung eines kapazitiven Meßverfahrens nach Anspruch 1, dadurch gekennzeichnet,
daß die Vorrichtung aus einem Grundgerät (1) mit einem Meßkopf (2) besteht, wobei der Meßkopf (2) eine Meßelektrode (3) aufweist, der sich in Richtung der zu bewertenden Druckwalze (4) ein elektrisch isolierendes Schutzschichtsystem (5) anschließt.

3. Vorrichtung nach Anspruch 2, dadurch gekennzeichnet,
daß der Meßkopf (2) mit dem Grundgerät (1) lösbar verbunden ist.

4. Vorrichtung nach Anspruch 2, dadurch gekennzeichnet,
daß der Meßkopf (2) einen Masseschirm (6) und einen aktiven phasensynchronen Schirm (7) aufweist.

5. Vorrichtung nach Anspruch 2, dadurch gekennzeichnet,
daß die Meßelektrode (3) im Meßkopf (2) federnd gelagert ist.

6. Vorrichtung nach Anspruch 2, dadurch gekennzeichnet,
daß im Grundgerät (1) eine Sensorelektronik (9) integriert ist, mittels der die vom Meßkopf (2) erzeugte Meßkapazität in ein Signal umgewandelt wird, welches vom Grundgerät (1) über ein Verbindungskabel (10) an eine separate Auswerte- und Steuerelektronik (11) weitergeleitet wird.
